# EUROPÄISCHE PATENTSCHRIFT

(11) **EP 2 236 785 B1**
(45) Veröffentlichungstag und Bekanntmachung des Hinweises auf die Patenterteilung: **07.12.2016**
(21) Anmeldenummer: 10157808.6
(22) Anmeldetag: 25.03.2010
(51) Int. Cl.: F01N 3/20, F01N 3/36, F01N 3/10, F01N 3/021, F01N 13/00

(54) **Abgasreinigungsanlage sowie Verfahren zum Zuführen eines Reaktionsmittels in den Abgasstrom einer Abgasreinigungsanlage**
Waste gas purification assembly and method for transporting a reaction agent into the waste gas flow of same
Installation de nettoyage des gaz d'échappement ainsi que procédé d'alimentation d'un moyen de réaction dans un flux de gaz d'une installation de nettoyage des gaz d'échappement

(30) Priorität: 03.04.2009 DE 202009002031 U
(43) Veröffentlichungstag der Anmeldung: 06.10.2010
(73) Patentinhaber: HJS Emission Technology GmbH & Co. KG, 58706 Menden (DE)
(72) Erfinder: Szablewski, Piotr, 42399 Wuppertal (DE)
(74) Vertreter: Haverkamp, Jens

(56) Entgegenhaltungen:
- DE-A1- 19 913 462
- DE-A1-102006 019 052
- JP-A- 2005 076 460

## Beschreibung

Die Erfindung betrifft eine Abgasreinigungsanlage für eine Brennkraftmaschine, insbesondere eine Dieselbrennkraftmaschine, umfassend ein in den Abgasstrang der Abgasreinigungsanlage eingeschaltetes, katalytisch in Gegenwart eines in den Abgasstrom eingebrachten Reaktionsmittels arbeitendes Abgasreinigungsaggregat, etwa einen SCR-Katalysator, und umfassend eine in Strömungsrichtung diesem Abgasreinigungsaggregat vorgeschaltete Reaktionsmittelzuführung mit einer in dem Abgasstrang angeordneten Reaktionsmittelausgabe und einen eingangsseitig und ausgangsseitig offenen, in Strömungsrichtung des Abgases ausgerichteten und mit seiner äußeren Mantelfläche von der Innenwand des Abgasstranges beabstandeten Reaktionsrohr, wobei die Reaktionsmittelausgabe zum Ausgeben des Reaktionsmittels in das Reaktionsrohr hinein angeordnet ist.

Dieselbrennkraftmaschinen sind zum Reduzieren von schädlichen Emissionen mit Abgasreinigungsanlagen ausgerüstet. Das von einer solchen Dieselbrennkraftmaschine ausgestoßene Abgas wird zu diesem Zweck durch eine in seinen Abgasstrang eingeschaltete Abgasreinigungsanlage geleitet. Eine solche Abgasreinigungsanlage kann mehrere Abgasreinigungsaggregate umfassen. Zum Entfernen von im Abgas mitgeführtem Ruß ist typischerweise in den Abgasstrang ein Partikelfilter eingeschaltet. Ist eine Entstickung des Abgases gewünscht, wird in den Abgasstrang ein SCR-Katalysator (*Selective Catalytic Reduction*) als Abgasreinigungsaggregat eingeschaltet. Für einen SCR-Prozess wird als Reaktionsmittel ein Reduktionsmittel benötigt. Als Reduktionsmittel wird Ammoniak eingesetzt. Dieses wird typischerweise in Form einer wässrigen Harnstofflösung als NH₃-Precursor, dem SCR-Katalysator vorgeschaltet, in den Abgasstrang eingedüst. Dabei ist Sorge dafür zu tragen, dass die dem Abgasstrom beigemengte Harnstofflösung vor Erreichen des SCR-Katalysators zum Freigeben des darin enthaltenen Ammoniak thermolytisch aufgespalten worden ist. Eine thermolytische Aufspaltung der zugeführten Harnstofflösung erfolgt in der Temperatur des Abgasstromes. Dieses muss daher eine bestimmte Mindestemperatur aufweisen. Zudem ist es erforderlich, dass eine ausreichende Strömungsstrecke zwischen dem Ort der Harnstoffeindüsung und dem SCR-Katalysator vorhanden ist.

Die notwendige Strömungsstrecke zwischen der Reaktionsmittelausgabe und dem nachgeschalteten SCR-Katalysator ist so auszulegen, dass die eingedüste wässrige Harnstofflösung nicht nur vor Erreichen des SCR-Katalysators zum Freisetzen des als Reduktionsmittel benötigten NH₃ thermolytisch aufgespalten ist, sondern dass dieses auch über die Querschnittsfläche des Abgasstranges in einer möglichst gleichmäßigen Konzentration eingangsseitig auf den SCR-Katalysator trifft. Das Zugeben des im Falle eines SCR-Katalysators als Reaktionsmittel eingesetzten Reduktionsmittels NH₃, das dem durch den Abgasstrang strömenden Abgasstrom beigemengt wird, erfolgt luftgestützt. Dieses dient dem Zweck, damit das aus der Reaktionsmittelausgabe ausgegebene Reaktionsmittel in Form feinverteilter Tröpfchen (Spray) austritt. Hierdurch soll das ausgegebene Reaktionsmittel eine große Oberfläche aufweisen, damit die zum Freisetzen des darin gebundenen NH₃ notwendige Thermolyse auf möglichst kurzer Strömungsstrecke erfolgen kann. Auch soll hierdurch eine Verteilung des eingebrachten Reaktionsmittels innerhalb des Abgasstromes begünstigt werden. Bei diesem Konzept ist es erforderlich, dass für den Zerstäubungsprozess Druckluft zur Verfügung steht. Dieses ist zwar bei dieselmotorbetriebenen Nutzfahrzeugen oftmals der Fall. Bei anderen Dieselmotoranwendungen, beispielsweise bei Baumaschinen oder Fahrzeugen ohne Druckluftbremse, kann eine solche Reaktionsmittelzudüsung nur erfolgen, wenn zusätzlich Druckluft bereitstellende Aggregate verbaut werden. Überdies hat sich gezeigt, dass bei einem Betrieb einer solchen Abgasreinigungsanlage in kälteren Umgebungen oder dann, wenn diese noch nicht auf Betriebstemperatur ist, das für die SCR-Katalyse benötigte Reduktionsmittel sich an den relativ kalten Innenwänden des Abgasstranges anlagert. Infolge dessen läuft die SCR-Katalyse, wenn überhaupt nur unvollständig ab. Das Abgasreinigungssystem ist durch derartige Ablagerungen insgesamt beeinträchtigt.

In DE 10 2006 019 052 A1 ist ein Verdampfermodul zum Anordnen in einem Abgasstrang beschrieben. Dieses Verdampfermodul dient zum Verdampfen von über ein Dosiermodul in den Abgasstrang eingegebenem Reaktionsmittel, beispielsweise wässriger Harnstofflösung. Gemäß einem Ausführungsbeispiel des in diesem Dokument beschriebenen Verdampfermoduls ist dieses als Reaktionsrohr ausgeführt, welches innerhalb des Abgasstranges von der Innenwand des Abgasstranges beabstandet angeordnet ist. Die in diesem Dokument beschriebenen Verdampfermodule verfügen sämtlich eingangsseitig über einen statischen Mischer. Dieser Mischer dient zum Abscheiden größerer Reduktionsmitteltröpfchen und zum Leiten derselben an die gegenüber der Außenwand der Abgasreinigungsanlage heißere Wand des Reaktionsrohres. Bei einer Ausgestaltung, bei der lediglich ein Verdampferkanal vorgesehen ist, ist dieses Rohr ausgangsseitig eingeschnürt, damit kurzzeitig auftretende Reduktionsmittelübermengen dort nicht auslaufen können. Offenbart wird zudem, dass dort, wo die beiden Teilströme des Abgasstromes wieder zusammenlaufen, die Gasgeschwindigkeiten sowohl im Reaktionsrohr als auch in dem diesen umgebenden Ringkanal ihr Maximum haben, was die Reduktionsmittelverdampfung und den Abriss von Tropfen aus dem Flüssigkeitsfilm an der Austrittskante des Reaktionsrohres begünstigen soll. Im Unterschied zu diesem Konzept wird in anderen Konzepten das Ziel verfolgt, möglichst keine Reduktionsmittelablagerungen oder Reduktionsmittelansammlungen im Abgasstrang auszubilden.

DE 199 13 462 A1 offenbart ein Verfahren zur thermischen Hydrolyse und Dosierung von Harnstoff bzw. wässriger Harnstofflösung in einem Reaktor mittels des Abgases einer Brennkraftmaschine. Dabei ist vorgesehen, dass der Harnstoff vor dem Reaktor über ein Rohr dem Abgas dosiert beigemengt wird. Bei diesem Verfahren ist vorgesehen, dass einem Abgasstrang stromauf des SCR-Katalysators ein Teilstrom des Abgases entnommen und durch den Reaktor für die Zwecke der Thermolyse geleitet wird. Anschließend wird der nach der Thermolyse im Reaktor mit NH₃ beladende Teilstrom noch stromauf des SCR-Katalysators wieder in den Abgasstrang zurückgeführt. Bei diesem Verfahren ist eine Verringerung der Strömungsgeschwindigkeit Teilstrom hinzunehmen.

Ausgehend von diesem diskutierten Stand der Technik liegt der Erfindung die Aufgabe zugrunde, eine eingangs genannte, gattungsgemäße Abgasreinigungsanlage unter zumindest weitestgehender Vermeidung der zu dem vordiskutierten Stand der Technik aufgezeigten Nachteile zu verbessern.

Diese Aufgabe wird erfindungsgemäß durch eine eingangs genannte, gattungsgemäße Abgasreinigungsanlage gelöst, bei der das Verhältnis der durchströmbaren Querschnittsfläche des Reaktionsrohres zu der Querschnittsfläche des das Reaktionsrohr umgebenden Abgasstranges im Bereich der Eingangsmündung des Reaktionsrohres um ein Mehrfaches kleiner ist als im Bereich seiner Ausgangsmündung, wobei das Reaktionsrohr innerhalb einer Verengung des Abgasstranges oder eine solche durchgreifend angeordnet ist..

Bei dieser Abgasreinigungsanlage ist in den Abgasstrang ein Reaktionsrohr eingebaut. Dieses befindet sich in einer Anordnung mit Abstand zu der Innenwand des Abgasstranges und ist bei einem Betrieb der Abgasreinigungsanlage außenseitig abgasumströmt. Das Reaktionsrohr ist eingangsseitig und ausgangsseitig offen und daher bei einem Betrieb der Abgasreinigungsanlage auch innenseitig von Abgas durchströmt. Die Reduktionsmittelausgabe befindet sich in einer Anordnung zu der eingangsseitigen Mündung des Reaktionsrohrs, dass die Reaktionsmittelausgabe in das Reaktionsrohr hinein erfolgt. Das Reaktionsrohr ist dergestalt konzipiert und innerhalb des Abgasstranges angeordnet, damit sich seine Eingangsmündung in einem Abschnitt des Abgasstranges befindet, in dem bei einem Betrieb der Anlage ein höherer statischer Druck herrscht als in dem Abschnitt des Abgasstranges, in dem seine Ausgangsmündung angeordnet ist. Vor dem Hintergrund eines systemseitig in Bezug auf einen den Abgasstrang durchströmenden Abgasstrom gleichbleibenden, sich aus der Summe des statischen und des dynamischen Druckes ergebenden Gesamtdruckes hat die vorbeschriebene Anordnung des Reaktionsrohrs mit seinen beiden Mündungen zur Folge, dass aufgrund des höheren statischen Druckes im Bereich der Eingangsmündung des Reaktionsrohrs in diesem Bereich ein kleinerer dynamischer Druck herrscht als aufgrund des geringeren statischen Druckes im Bereich des Ausganges des Reaktionsrohres. Der Unterschied in dem dynamischen Druck bedingt eine Beschleunigung des das Reaktionsrohr durchströmenden Abgases, welches sodann das Reaktionsrohr mit einer höheren Geschwindigkeit durchströmt. Dieser Beschleunigungseffekt und/oder die höhere Strömungsgeschwindigkeit innerhalb des Reaktionsrohres wird zum Durchmischen des über die Reaktionsmittelausgabe dem das Reaktionsrohr durchströmenden Abgas beigemengten Reaktionsmittels, beispielsweise Urea als NH₃-Precursor genutzt. Zudem erfolgt eine Zerstäubung typischerweise durch das anströmende Abgas, welches, verglichen mit der Temperatur der Umgebungsluft, eine deutlich höhere Temperatur aufweist, auch wenn die Abgasreinigungsanlage noch nicht auf Betriebstemperatur ist oder in einer kalten Umgebung betrieben wird. Somit wird die in dem Abgasstrom transportierte Wärme bereits bei der gewünschten Zerstäubung bzw. bei der Vermischung des ausgegebenen Reaktionsmittels im Abgasstrom genutzt. Dieses begünstigt den bei Einbringen von Urea als Reaktionsmittel zum Freisetzen des NH₃ notwendigen Thermolyseprozess.

Das Reaktionsrohr ist mit Abstand zur Innenwand des Abgasstranges angeordnet und somit durch das das Reaktionsrohr außenseitig umströmende Abgas thermisch von der Innenwand des Abgasstranges isoliert. Daher kann in dieser Abgasreinigungsanlage bereits in einem sehr frühen Betriebszyklusstadium der Brennkraftmaschine Reaktionsmittel dem Abgasstrom beigemengt werden, ohne dass befürchtet werden müsste, dass dieses vor seiner thermolytischen Aufspaltung im Falle einer Zuführung von wässriger Harnstofflösung an der Innenwand des Abgasstranges zur Ablagerung gelangen könnte.

Die Anordnung des Reaktionsrohres mit Abstand zur Innenwand des Abgasstranges wird erfindungsgemäß genutzt, um im Bereich des Reaktionsrohres zwei Abgasteilströme auszubilden, von denen einer durch das Reaktionsrohr und während der andere in dem das Reaktionsrohr umgebenden Ringkanal strömt. Wesentlich ist, dass einer der beiden Abgasteilströme gegenüber den anderen beschleunigt wird. Dabei ist typischerweise vorgesehen, dass der das Reaktionsrohr durchströmende Abgasteilstrom eine stärkere Beschleunigung erfährt. Erreicht wird dieses dadurch, dass die durchströmbare Querschnittsfläche des Reaktionsrohres im Bereich seiner Eingangsmündung gegenüber der Gesamtquerschnittsfläche des Abgasstranges im Bereich der Eingangsmündung des Reaktionsrohres relativ klein ist, während dieses Verhältnis im Bereich der Ausgangsmündung des Reaktionsrohres signifikant zugunsten der Querschnittsfläche des Reaktionsrohres geändert ist. Wesentlich ist, dass durch die unterschiedliche Beschleunigung der beiden Abgasteilströme im Bereich der Ausgangsmündung des Reaktionsrohres bereichsweise ein Unterdruck entsteht und auf diese Weise im Bereich der Ausgangsmündung des Reaktionsrohres eine Saugstrahlpumpe gebildet ist, die Sorge dafür trägt, dass ein Saugeffekt entsteht, der auch als "Kamineffekt" angesprochen werden kann. Besonders bei einem Betrieb der Brennkraftmaschine mit geringer Last oder im Leerlauf ist dieses von Vorteil, da bei einem solchen Betrieb die Strömungsgeschwindigkeit des Abgases relativ gering ist und die Gefahr besteht, dass aufgrund der geringen Abgasströmungsgeschwindigkeit eingebrachtes Reduktionsmittel sich an den Wänden des Abgasrohres ablagert. Durch die Beschleunigung des einen Abgasteilstromes und durch das Konzept, das Reduktionsmittel diesem Abgasteilstrom beizumengen, wird nicht nur eine Vermischung des eingegebene Reduktionsmittels mit dem Abgasteilstrom begünstigt, sondern es werden zudem Ablagerungen desselben vor seiner thermolytischen Zersetzung wirksam vermieden. Die vorbeschriebene Problematik und die diesbezüglich vorgeschlagene Lösung sind besonders wirkungsvoll, wenn die Reduktionsmittelzuführung noch innerhalb des Gehäuses eines ersten Abgasreinigungsaggregates, beispielsweise eines Partikelfilters angeordnet ist, mithin sich die Eingangsmündung und die Reduktionsmittelzuführung in einem Bereich des Abgasstranges befinden, der eine relativ große freie durchströmbare Querschnittsfläche aufweist. Diese große Querschnittsfläche hat zur Folge, dass gerade in diesen Bereichen bei einem Betrieb der Brennkraftmaschine mit geringer Last oder im Leerlauf nur sehr geringe Abgasströmungsgeschwindigkeiten herrschen. Bei beengten Einbauverhältnissen, in denen Abgasreinigungsanlagen sehr kompakt bauend zu konzipieren sind, wird man aufgrund des vorhandenen Raumes innerhalb des Gehäuses eines ersten Abgasreinigungsaggregates, beispielsweise eines Partikelfilters oder eines Oxidationskatalysators diesen in Strömungsrichtung nachgeschaltet nach innerhalb seines Gehäuses die Reduktionsmittelzuführung anordnen.

Um den vorbeschriebenen Beschleunigungseffekt innerhalb des Reaktionsrohres zu erhalten, befindet sich dieses erfindungsgemäß innerhalb einer Verengung des Abgasstranges oder durchgreift eine solche. Eine solche Verengung befindet sich beispielsweise am Ausgang eines der Reduktionsmittelzuführung vorgeschalteten Abgasreinigungsaggregates, beispielsweise eines Partikelfilters, wenn sich die Querschnittsfläche des Abgasstranges von dem Querschnitt des Gehäuses des Abgasreinigungsaggregates zu einem diesem nachgeschalteten Rohrabschnitt hin verjüngt. Das Reaktionsrohr ist sodann in diesem Bereich angeordnet und erstreckt sich typischerweise von dem Gehäuse des vorgeschalteten Abgasreinigungsaggregates bis in ein diesem nachgeschaltetes Abgasrohr. Gehalten ist ein solches Reaktionsrohr beispielsweise durch zwei oder mehr radial abragende Speichen an der Innenwand des Abgasstranges. Das Reaktionsrohr weist vorzugsweise eine gleichbleibende lichte durchströmbare Querschnittsfläche auf. In einer anderen Ausgestaltung verjüngt sich das Reaktionsrohr in Strömungsrichtung, wobei diese Verjüngung jedoch geringer ausfällt als die durch die Verengung im Abgasstrang gebildete Verjüngung. Das Reaktionsrohr kann, wenn gewünscht, strömungslenkende Strukturen, beispielsweise angeformt an seiner Innenwand oder als Einbauten konzipiert aufweisen. Diese strömungslenkenden Mittel können ebenfalls zum Unterstützen eines Mischvorganges Turbulenzen erzeugend sein.

Bei dem im Rahmen dieser Ausführungen benutzten Begriff *Reaktionsrohr* handelt es sich um einen Rohrkörper mit einer gewissen Länge, wobei zwar vorzugsweise, jedoch nicht notwendigerweise das zugegebene Reaktionsmittel innerhalb dieses Rohrs vollständig zersetzt sein muss, beispielsweise durch Thermolyse.

Selbstverständlich können auch andere Reaktionsmittel in das Reaktionsrohr eingebracht werden, auch solche, die durch andere Mechanismen und nicht notwendigerweise durch Thermolyse zersetzt werden. Auch kann in das Reaktionsrohr als Reaktionsmittel ein solches eingebracht werden, welches nicht in Form eines Precursors zugeführt wird, sondern bei dem das Reaktionsmittel der für die katalytische Reaktion benötigten Stoff selbst ist. In einem solchen Fall dient das Reaktionsrohr mit seinen vorbeschriebenen Eigenschaften insbesondere zur Vermengung desselben innerhalb des Abgasstromes und um ggf. Rückbildungen an kalten Abgasstrangwänden zu verhindern.

Untersuchungen haben gezeigt, dass durch den Einbau eines solchermaßen konzipierten Reaktionsrohres in den Abgasstrang einschließlich der zur Ausgabe des Reaktionsmittels benötigten Elemente der Abgasgegendruck nicht, zumindest nicht in einem nennenswerten Maße, erhöht wird. Es wird angenommen, dass auch insoweit der beschriebene Beschleunigungseffekt innerhalb des Reaktionsrohres bzw. der vorbeschriebene Saugeffekt hierauf Einfluss hat.

Nachfolgend ist die Erfindung anhand eines Ausführungsbeispiels unter Bezugnahme auf die beigefügten Figuren beschrieben. Es zeigen:
- **Fig. 1:**: Eine schematisierte Darstellung nach Art eines Blockschaltbildes einer Abgasreinigungsanlage gemäß einem ersten Ausführungsbeispiel,
- **Fig. 2a, 2b:**: Querschnittsdarstellungen durch die Abgasreinigungsanlage der Fig. 1 entlang der Linie A - B (Figur 2a) sowie entlang der Linie C - D (Figur 2b),
- **Fig. 3:**: eine Abgasreinigungsanlage gemäß einem weiteren Ausführungsbeispiel und
- **Fig. 4:**: eine Stirnseitenansicht der Abgasreinigungsanlage der Figur 2.

Eine Abgasreinigungsanlage 1 ist in den Abgasstrang 2 eines nicht näher dargestellten Dieselmotors eingeschaltet. Bei dem dargestellten Ausführungsbeispiel verfügt die Abgasreinigungsanlage 1 über zwei Abgasreinigungsaggregate 3, 4, wobei es sich bei dem einen Abgasreinigungsaggregat um eine Partikelfiltereinheit 3 und bei dem weiteren Abgasreinigungsaggregat um einen SCR-Katalysator 4 handelt. Die Partikelfiltereinheit 3 umfasst einen Oxidationskatalysator 5 und einen diesem nachgeschalteten Partikelfilter 6. Die Partikelfiltereinheit 3 befindet sich in einem Gehäuse 7, welches einen gegenüber dem Durchmesser des das Abgas heranführenden Rohres 8 größeren Innendurchmesser aufweist. Abströmseitig zu dem Partikelfilter 6 verjüngt sich das Gehäuse 7 im Übergang desselben zu einem die Partikelfiltereinheit 3 mit dem SCR-Katalysator 4 verbindenden Abgasrohrstück 9. Die vorgenannte Verjüngung 10 des Gehäuses 7 ist bei dem dargestellten Ausführungsbeispiel konisch ausgeführt.

Die Verjüngung 10 durchgreifend ist mit einem Abschnitt in dem Gehäuse 7 und mit einem weiteren Abschnitt in das Abgasrohrstück 9 hineinreichend ein Reaktionsrohr 11 angeordnet. Das Reaktionsrohr 11 ist umfänglich mit seiner äußeren Mantelfläche 12 in nicht dargestellter Art und Weise von der Innenwand 13 des Abgasrohrstückes 9 und dem Gehäuse 7 beabstandet gehalten. Der Abstand der Mantelfläche 12 von der Innenwand 13 ist hinreichend groß, damit der auf diese Weise gebildete Ringspalt von Abgas durchströmt und sodann als Ringkanal angesprochen werden kann. Das Reaktionsrohr 11 verfügt über eine Eingangsmündung 14 und eine Ausgangsmündung 15. Bei dem dargestellten Ausführungsbeispiel ist das Reaktionsrohr 11 zylindrisch. Im Bereich der Eingangsmündung 14 ist eine Dosierdüse 16 als Reaktionsmittelausgabe angeordnet, und zwar dergestalt, dass das ausgegebene Reaktionsmittel in das Inneren 17 des Reaktionsrohrs 11 hinein ausgegeben wird. Die Dosierdüse 16 ist angeschlossen an eine Reaktionsmittelzuführleitung 18, in die außerhalb des Gehäuses 7 ein die Dosierung steuerndes Taktventil 19 eingeschaltet ist. Die Reaktionsmittelzuführleitung 18 ist in nicht näher dargestellter Art und Weise an eine Pumpe und diese wiederum an einen das auszugebende Reaktionsmittel bevorratenden Tank angeschlossen. Die Aktoren der Reaktionsmittelzuführung werden von einer in den Figuren nicht dargestellten Steuereinheit angesteuert.

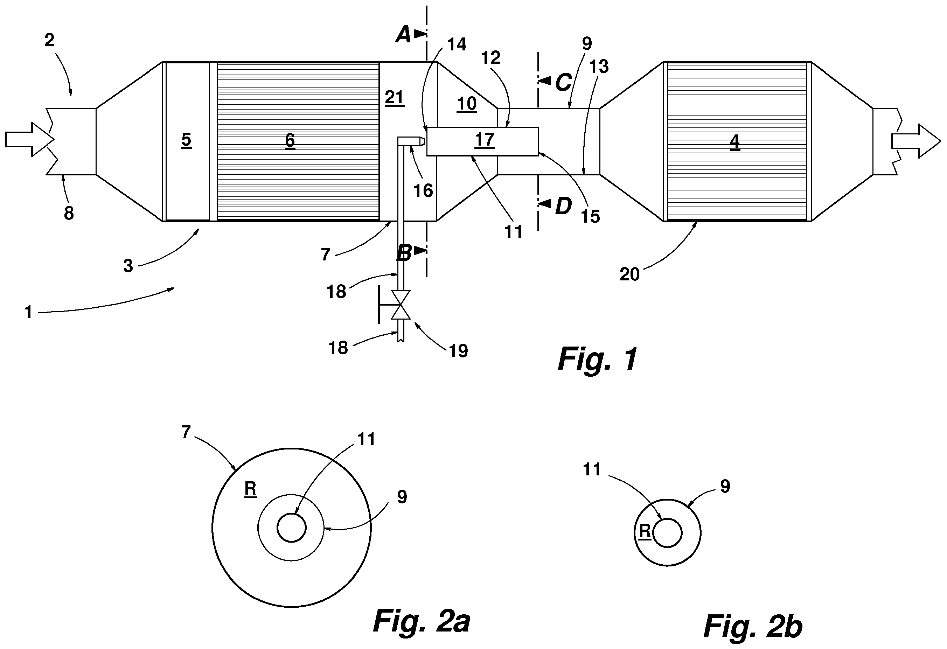

Figur 2a zeigt einen schematisierten Querschnitt durch die Abgasreinigungsanlage 1 bzw. ihres Abgasstranges 2 im Bereich der Linie A - B. Aus dieser Querschnittsdarstellung ist erkennbar, dass die durchströmbare Querschnittsfläche des Reaktionsrohres 11 verglichen mit der Querschnittsfläche des das Reaktionsrohr 11 umgebenden Gehäuses 7 als Teil des Abgasstranges 2 klein ist (siehe Figur 2a im Vergleich zur Figur 2b). Aufgrund seiner zylindrischen Ausgestaltung bleibt die durchströmbare Querschnittsfläche des Reaktionsrohres 11 über seine Länge konstant, so dass auch im Bereich der Ausgangsmündung 15 das Reaktionsrohr 11 dieselbe durchströmbare Querschnittsfläche aufweist wie im Bereich seiner Eingangsmündung 14. Im Unterschied hierzu ist die durchströmbare Querschnittsfläche des das Reaktionsrohr 11 umgebenden Ringkanals R im Bereich der Ausgangsmündung 15 gegenüber der Querschnittsfläche des Ringkanals R im Bereich der Eingangsmündung um ein Vielfaches und damit signifikant reduziert. Damit ist das Verhältnis zwischen der durchströmbaren Querschnittsfläche des Reaktionsrohres 11 und der Gesamtquerschnittsfläche des Abgasstranges 2 im Bereich der Eingangsmündung 14 um ein Vielfaches kleiner als dieses Verhältnis im Bereich der Ausgangsmündung 15 des Reaktionsrohres 11. Eine solche Anordnung wird erreicht, bei dem dargestellten Ausführungsbeispiel, dass die Verjüngung 10 durchgreift, in das Abgasrohrstück 9 hineinreicht und die Ausgangsmündung 15 mit Abstand zu dem Ausgang der Verjüngung 10 innerhalb des Abgasrohrstückes 9 angeordnet ist. Das Abgasrohrstück 9 mündet in ein den SCR-Katalysator 4 aufnehmendes Gehäuse 20.

Bei einem Betrieb des Dieselmotors wird das von diesem ausgestoßene Abgas über den Abgasstrang 2 weggeführt. In diesem Zuge wird das ausgestoßene Abgas durch die Abgasreinigungsanlage 1 geleitet. Mitgeführte Feststoffe, insbesondere Rußpartikel, werden an der anströmseitigen Oberfläche des Partikelfilters 6 zurückgehalten. Je nach Ausgestaltung der Partikelfiltereinheit wird der Partikelfilter 6 aktiv oder passiv regeneriert, indem der auf der anströmseitigen Filteroberfläche akkumulierte Ruß oxidiert wird. Das diesbezüglich gereinigte Abgas tritt ausgangsseitig aus dem Partikelfilter 6 aus und wird anschließend zu seiner Entstickung dem SCR-Katalysator 4 zugeführt. Das warme, aus dem Partikelfilter 6 austretende Abgas durchströmt und umströmt das Reaktionsrohr 11. Das Reaktionsrohr 11 weist daher eine der Abgastemperatur entsprechende Temperatur auf. Diese ist insbesondere bei kalten Umgebungen oder kurz nach dem Start des Dieselmotors höher als die Temperatur an der Innenwand 13 des Gehäuses 7 oder des Abgasrohrstückes 9. Infolge der Verjüngung 10 zwischen dem größeren Innendurchmesser des Gehäuses 7 und dem gegenüber diesem sehr viel kleineren Innendurchmesser des Abgasrohrstücks 9 bildet die Verjüngung 10 eine Verengung innerhalb des Abgasstranges 2. Mithin bildet die Verengung dem anströmenden Abgas gegenüber ein Strömungshindernis mit der Folge, dass in dem von dem Gehäuse 7 am Ausgang des Partikelfilters 6 eingeschlossenen Raum 21 vor der Verjüngung 10 ein größerer statischer Druck Pₛₜₐₜ herrscht als in dem einen kleineren Durchmesser aufweisenden Abgasrohrstück 9. Aufgrund des in dem strömenden System bekannten Zusammenhanges, dass der Gesamtdruck innerhalb des Systems gleich ist und sich dieser aus der Summe des statischen Druckes Pₛₜₐₜ und des dynamischen Druckes P_{dyn}

(P_{gesamt} = Pₛₜₐₜ + P_{dyn}) errechnet, ergibt sich, dass der dynamische Druck P_{dyn} im Bereich des Abgasrohrstückes 9 und damit im Bereich der Ausgangsmündung 15 des Reaktionsrohrs 11 höher ist als im Bereich des Raumes 21 vor der Verjüngung 10 und damit in demjenigen Raum des Abgasstranges 2, in dem sich die Eingangsmündung 14 des Reaktionsrohrs 11 befindet. Da das Reaktionsrohr 11 mit gleichbleibender oder im Wesentlicher gleichbleibender Querschnittsfläche unverjüngt ist, hat dieses innerhalb des Reaktionsrohres 11 eine Beschleunigung des das Reaktionsrohr 11 durchströmenden Abgases zur Folge. Die Strömungsgeschwindigkeit des das Reaktionsrohr 11 durchströmenden Abgases ist deutlich höher als diejenige des an der Außenseite des Reaktionsrohrs 11 entlangströmende Abgasteilstromes. In Abhängigkeit von der Ausgestaltung des Reaktionsrohres 11 kann dieses auch dergestalt ausgelegt werden, dass in dem Raum 21, in dem die Eingangsmündung 14 des Reaktionsrohres 11 angeordnet ist, ein auf das anströmende Abgas wirkender Ansaugeffekt durch das Reaktionsrohr 11 beobachtet werden kann.

Bei der vorbeschriebenen Funktionsweise wird der aus dem Partikelfilter 6 austretende Abgasstrom geteilt, und zwar in einen Abgasteilstrom, der durch das Reaktionsrohr 11 strömt, und in einen weiteren Abgasteilstrom, der durch den das Reaktionsrohr 11 umgebenden Ringkanal R strömt. Aufgrund der in dem Ringkanal R enthaltenen Verengung, die für die vorbeschriebene Querschnittsflächenverringerung des Ringkanales R und damit des Abgasstranges 2 verantwortlich ist, ist die Verengung für den den Ringkanal R durchströmenden Abgasteilstrom wirksam. Dieses begründet die unterschiedliche Strömungsgeschwindigkeit des das Reaktionsrohr 11 durchströmenden Abgasteilstroms gegenüber dem Abgasteilstrom, der durch den Ringkanal R strömt. Der Strömungsgeschwindigkeitskontrast ist abhängig von der Änderung des Querschnittsflächenverhältnisses.

Versuche haben gezeigt, dass hinreichende Wirkungen erzielt werden, wenn mehr als 50 % des Abgasstromes durch das Reaktionsrohr 11 strömen. Bevorzugt sind jedoch Ausgestaltungen, bei denen mehr als 65 %, insbesondere zwischen 70 und 80 % des Abgasstromes als Abgasteilstrom durch das Reaktionsrohr 11 geleitet wird. Die vorstehenden Angaben sind als Richtgrößen zu verstehen, die sich grundsätzlich über das Brennkraftmaschinenlastspektrum erstrecken. Mithin ist vorgesehen, dass unabhängig von der Lastsituation der Brennkraftmaschine regelmäßig mehr als 50 % des Abgasstromes durch das Reaktionsrohr 11 strömen.

Die innerhalb des Reaktionsrohres 11 relativ hohe Strömungsgeschwindigkeit des durch dieses strömenden Abgases und die Konzeption, dass Reaktionsmittel diesem höher energetischen und eine relativ hohe Temperatur aufweisenden Abgasteilstrom beigemengt wird, führt bei Zuführen einer wässrigen Harnstofflösung als Reaktionsmittel zu einer Thermolyse und zu einer intensiven Durchmischung mit dem das Reaktionsrohr 11 durchströmenden Abgas auf kurzer Strecke. Das Reaktionsrohr 11 ist zweckmäßigerweise ausgelegt, damit das aus seiner Ausgangsmündung 15 ausströmende Abgas, um das thermolytisch aufgespaltene Reaktionsmittel angereichert, in einer Art und Weise ausströmt, dass sich dieses mit dem das Reaktionsrohr außenseitig umströmenden Abgasstrom vermengt. Die beiden im Anschluss an die Ausgangsmündung 15 zusammentreffenden Abgasströme - der durch das Reaktionsrohr 11 strömende Abgasteilstrom sowie der an der äußeren Mantelfläche 12 entlang strömende Abgasteilstrom - weisen, wie bereits ausgeführt, unterschiedliche Strömungsgeschwindigkeiten auf, so dass eine Vermischung dieser beiden Abgasströme bereits durch aufgrund der unterschiedlichen Strömungsgeschwindigkeiten sich ausbildenden Turbulenzen erfolgt. Im Bereich der Ausgangsmündung 15 des Reaktionsrohrs 11 entsteht aufgrund der höheren Strömungsgeschwindigkeit des das Reaktionsrohr 11 durchströmenden Abgasteilstromes ein Unterdruck, weshalb sich ein Saugeffekt einstellt, der zu einer turbulenten Vermischung der beiden zusammengeführten Abgasteilströme führt. Folglich wird dem SCR-Katalysator 4 das durch die Thermolyse freigesetzte NH₃ in homogener Verteilung in dem den SCR-Katalysator 4 anströmenden Abgas beaufschlagt.

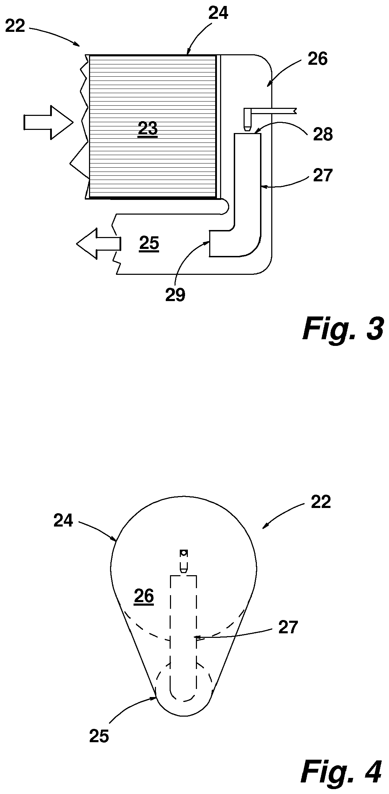

Figur 3 zeigt ein weiteres Ausführungsbeispiel einer Abgasreinigungsanlage 22, die prinzipiell aufgebaut ist wie die Abgasreinigungsanlage 1 der Figur 1. Im Unterschied zu der Abgasreinigungsanlage 1 ist die Abgasreinigungsanlage 22 kompakter bauend ausgelegt. Bei dieser Abgasreinigungsanlage 22 wird das aus dem Partikelfilter 23 ausströmende Abgas um 180°umgelenkt wird. Die Durchmesserverringerung des Gehäuses 24 von seinem größeren Durchmesser im Bereich des Ausganges des Partikelfilters 23 zu dem kleineren Durchmesser des anschließenden Rohrstückes 25 erfolgt durch einen entsprechend verjüngten Gehäuseabschnitt 26. Die Verjüngung des Gehäuseabschnittes 26 und damit die Änderung des Querschnittsflächenverhältnisses zwischen der durchströmbaren Querschnittsfläche des Reaktionsrohrs 27 und Querschnittsfläche des das Reaktionsrohr 27 umgebenden Ringkanals in Bezug auf die Verhältnisse im Bereich der Eingangsmündung des Reaktionsrohres 27 und seiner Ausgangsmündung ist in der Seitenansicht der Figur 4 erkennbar. In diesem Gehäuseabschnitt 26, welches aufgrund seiner Verjüngung eine Drosselstelle bildet, ist das Reaktionsrohr 27 angeordnet. Erkennbar befindet sich die Eingangsmündung 28 des Reaktionsrohres 27 in einem Bereich des Gehäuseabschnittes 26, der eine größere Querschnittsfläche aufweist als derjenige Abschnitt, in dem sich die Ausgangsmündung 29 befindet. Das Reaktionsrohr 27 ist mit einer Krümmung ausgebildet, damit dieses mit seiner Ausgangsmündung 29 innerhalb des Rohrstückes 25 angeordnet ist. Infolge dieser Konzeption stellt sich auch bei diesem Reaktionsrohr 27 die gewünschte Beschleunigung des das Reaktionsrohr 27 durchströmenden Abgases sowie die zu dem Ausführungsbeispiel der Figuren 1, 2a, 2b beschriebenen Vorteile einer Zuführung von Reduktionsmittel, insbesondere wässriger Harnstofflösung ein.

Das Ausführungsbeispiel der Figuren 3 und 4 macht deutlich, dass trotz sehr kompakter Bauweise des dargestellten Ausschnittes einer Abgasreinigungsanlage eine auf relativ kurzer Strecke wirksame Vermischung eines eingebrachten Reduktionsmittels einschließlich seiner Thermolyse erfolgt, ohne dass die Gefahr besteht, dass sich dieses an Wänden niederschlagen würde. Auch diesbezüglich wirkt sich die Beschleunigung des Abgasteilstromes innerhalb des Reaktionsrohres positiv aus, da höheren Strömungsgeschwindigkeiten Reduktionsmitteltröpfchen über eine längere Zeit transportiert werden können, insbesondere auch größere Reduktionsmitteltröpfchen. Somit wird die thermolytische Zersetzung eines in flüssiger Form zugeführten Reduktionsmittels sowie beispielsweise Urea begünstigt.

Es hat sich gezeigt, dass hinreichende Ergebnisse bereits bei einer Querschnittsflächenreduzierung im Ringkanal zwischen dem Bereich der Eingangsmündung des Reaktionsrohres und seiner Ausgangsmündung um einen Faktor 2 bis 3 bei gleich bleibender oder im wesentlichen gleich bleibender Querschnittsfläche des Reaktionsrohres erzielt werden. Bevorzugt werden jedoch Querschnittsflächenverringerungen um den Faktor 4 bis 6 hinsichtlich der Reduzierung der freien durchströmbaren Querschnittsfläche des Ringkanals. So kann beispielsweise das Querschnittsflächenverhältnis zwischen der Querschnittsfläche des Reaktionsrohres in Bezug auf die Querschnittsfläche des Ringkanals jeweils im Bereich der Eingangsmündung des Reaktionsrohres beispielsweise 1 : 30 bis 1 : 10 betragen, während dasselbe Verhältnis im Bereich der Ausgangsmündung beispielsweise nur 1 : 15 bis 1 : 5 beträgt. Wesentlich ist, dass dieses Verhältnis im Bereich der Ausgangsmündung des Reaktionsrohres signifikant größer ist als im Bereich der Eingangsmündung desselben.

Die Erfindung ist anhand von Ausführungsbeispielen beschrieben worden. Ohne den Umfang der Ansprüche zu verlassen, ergeben sich für einen auf dem Gebiet tätigen Fachmann zahlreiche weitere Ausgestaltungen, ohne dass diese im Einzelnen explizit dargelegt werden müssten. So wird ein Fachmann die Länge des Reaktionsrohres an die baulichen Gegebenheiten und die zu erzielende Beschleunigung bzw. Strömungsgeschwindigkeit innerhalb des Reaktionsrohres anpassen. Gleiches gilt für eine Konzeption von möglicherweise innerhalb und/oder auch außerhalb des Reaktionsrohres angeordneten strömungslenkenden Elementen sowie die geometrische Gestaltung seiner Mündungen.

### Bezugszeichenliste

- 1: Abgasreinigungsanlage
- 2: Abgasstrang
- 3: Partikelfiltereinheit
- 4: SCR-Katalysator
- 5: Oxidationskatalysator
- 6: Partikelfilter
- 7: Gehäuse
- 8: Rohr
- 9: Abgasrohrstück
- 10: Verjüngung
- 11: Reaktionsrohr
- 12: Mantelfläche
- 13: Innenwand
- 14: Eingangsmündung
- 15: Ausgangsmündung
- 16: Dosierdüse
- 17: Inneres des Reaktionsrohres
- 18: Reaktionsmittelzuführleitung
- 19: Taktventil
- 20: Gehäuse
- 21: Raum
- R: Ringkanal

- 22: Abgasreinigungsanlage
- 23: Partikelfilter
- 24: Gehäuse
- 25: Rohrstück
- 26: Gehäuseabschnitt
- 27: Reaktionsrohr
- 28: Eingangsmündung
- 29: Ausgangsmündung

## Patentansprüche

1. Abgasreinigungsanlage für eine Brennkraftmaschine, insbesondere eine Dieselbrennkraftmaschine, umfassend ein in den Abgasstrang (2) der Abgasreinigungsanlage (1, 22) eingeschaltetes, katalytisch in Gegenwart eines in den Abgasstrom eingebrachten Reaktionsmittels arbeitendes Abgasreinigungsaggregat (4), etwa einen SCR-Katalysator, und umfassend eine in Strömungsrichtung diesem Abgasreinigungsaggregat (4) vorgeschaltete Reaktionsmittelzuführung mit einer in dem Abgasstrang (2) angeordneten Reaktionsmittelausgabe (16) und einen eingangsseitig und ausgangsseitig offenen, in Strömungsrichtung des Abgases ausgerichteten und mit seiner äußeren Mantelfläche von der Innenwand (13) des Abgasstranges (2) beabstandeten Reaktionsrohr (11, 27), wobei die Reaktionsmittelausgabe (16) zum Ausgeben des Reaktionsmittels in das Reaktionsrohr (11, 27) hinein angeordnet ist, **dadurch gekennzeichnet, dass** das Verhältnis der durchströmbaren Querschnittsfläche des Reaktionsrohres (11, 27) zu der Querschnittsfläche des das Reaktionsrohr (11, 27) umgebenden Abgasstranges (2) im Bereich der Eingangsmündung (14, 28) des Reaktionsrohres (11, 27) um ein Mehrfaches kleiner ist als im Bereich seiner Ausgangsmündung (15, 29), wobei das Reaktionsrohr (11, 27) innerhalb einer Verengung (10) des Abgasstranges (2) oder eine solche durchgreifend angeordnet ist.

2. Abgasreinigungsanlage nach Anspruch 1, **dadurch gekennzeichnet, dass** die Reaktionsmittelausgabe (16) im Bereich der Eingangsmündung (14, 28) des Reaktionsrohrs (11, 27) angeordnet ist.

3. Abgasreinigungsanlage nach Anspruch 1 oder 2, **dadurch gekennzeichnet, dass** die Verengung durch eine einem in den Abgasstrang (2) eingeschalteten Abgasreinigungsaggregat, etwa einem Partikelfilter (6, 23) nachgeschaltete Verjüngung der freien durchströmbaren Querschnittsfläche gebildet ist.

4. Abgasreinigungsanlage nach einem der Ansprüche 1 bis 3, **dadurch gekennzeichnet, dass** das Reaktionsrohr (11, 27) eine gleichbleibende oder weitestgehend gleichbleibende freie durchströmbare Querschnittsfläche aufweist.

5. Abgasreinigungsanlage nach einem der Ansprüche 1 bis 4, **dadurch gekennzeichnet, dass** das Reaktionsrohr strömungslenkende Innenwandstrukturen und/oder strömungslenkende Einbauten aufweist.

6. Abgasreinigungsanlage nach einem der Ansprüche 1 bis 5, **dadurch gekennzeichnet, dass** das in den Abgasstrang (2) eingeschaltete Abgasreinigungsaggregat ein SCR-Katalysator (4) ist und die Reaktionsmittelzuführung zum Zuführen von wässriger Harnstofflösung an einen Harnstofflösung bevorratenden Behälter angeschlossen ist.

## Claims

1. Exhaust gas purification assembly for a combustion engine, in particular a diesel engine, comprising a exhaust gas purification apparatus (4) engaged in the exhaust section (2) of the exhaust gas purification assembly (1, 22), operating catalytically in the presence of a reaction agent introduced into the exhaust gas flow, such as an SCR catalyst, and comprising a reaction agent feed upstream of this exhaust gas purification apparatus (4) in the flow direction, with a reaction agent dosing nozzle (16) arranged in the exhaust section, and a reaction pipe (11, 27), open on the input side and on the output side and aligned in the flow direction of the exhaust gas, and with its outer mantle surface spaced at a distance from the inner wall (13) of the exhaust section (2), wherein the reaction agent dosing nozzle (16) is arranged for the dispensing of the reaction agent into the reaction pipe (11, 27), **characterised in that** the ratio of the cross-sectional area of the reaction pipe (11, 27), through which flow takes place, to the cross-sectional area of the exhaust section (2) surrounding the reaction pipe (11, 27) in the region of the input opening (14, 28) of the reaction pipe (11, 27) is significantly smaller than in the region of its output opening (15, 29), wherein the reaction pipe (11, 27) is arranged inside a narrowing section (10) of the exhaust section (2), or is arranged engaging through such a section.

2. Exhaust gas purification assembly according to claim 1, **characterised in that** the reaction agent dosing nozzle (16) is arranged in the region of the input opening (14, 28) of the reaction pipe (11, 27).

3. Exhaust gas purification assembly according to claim 1 or 2, **characterised in that** the narrowing section is formed by a narrowing in the cross-sectional area freely open to flow, downstream of a exhaust gas purification apparatus engaged in the exhaust section (2), such as a particle filter (6, 23).

4. Exhaust gas purification assembly according to any one of claims 1 to 3, **characterised in that** the reaction pipe (11, 27) exhibits a uniform or essentially uniform cross-sectional area which can be freely flowed through.

5. Exhaust gas purification assembly according to any one of claims 1 to 4, **characterised in that** the reaction pipe comprises flow-deflecting inner wall structures and/or flow-deflecting inbuilt elements.

6. Exhaust gas purification assembly according to any one of claims 1 to 5, **characterised in that** the exhaust gas purification apparatus engaged in the exhaust section (2) is an SCR catalyst (4), and the reaction agent dosing nozzle is connected to a container storing a urea solution in order to deliver aqueous urea solution.

## Revendications

1. Installation de nettoyage des gaz d'échappement pour un moteur à combustion interne, notamment un moteur diesel, comprenant, dans l'installation de nettoyage des gaz d'échappement (1, 22) intégrée au le circuit des gaz d'échappement (2), un groupe de nettoyage des gaz d'échappement (4) fonctionnant de façon catalytique en présence d'un produit de réaction introduit dans le flux de gaz d'échappement, par exemple un catalyseur à RCS, et comprenant à l'amont de ce groupe de nettoyage des gaz d'échappement (4), considéré dans le sens d'écoulement, une alimentation de produit de réaction avec une distribution (16) de produit de réaction disposée dans le circuit des gaz d'échappement (2) et avec un tube de réaction (11, 27), ouvert du côté entrée et du côté sortie, ajusté dans le sens d'écoulement des gaz d'échappement et dont la surface d'enveloppe extérieure est à distance de la paroi interne (13) du circuit des gaz d'échappement (2), la distribution (16) de produit de réaction destinée à distribuer le produit de réaction étant disposée à l'intérieur du tube de réaction (11, 27), **caractérisée en ce que** le rapport entre la surface de section du tube de réaction (11, 27) pouvant être traversée par un flux et la surface de section du circuit de gaz d'échappement (2) entourant le tube de réaction (11, 27) est plusieurs fois inférieur au niveau de l'orifice d'entrée (14, 28) du tube de réaction (11, 27) qu'au niveau de l'orifice de sortie (15, 29), le tube de réaction (11, 27) étant disposé dans un étranglement (10) du circuit des gaz d'échappement (2) ou en traversant un.

2. Installation de nettoyage des gaz d'échappement selon la revendication 1, **caractérisée en ce que** la distribution (16) du produit de réaction est disposée au niveau de l'orifice d'entrée (14, 28) du tube de réaction (11, 27).

3. Installation de nettoyage des gaz d'échappement selon la revendication 1 ou 2 **caractérisée en ce que** l'étranglement est formé par un groupe de nettoyage des gaz d'échappement intégré au circuit des gaz d'échappement (2), par exemple par un rétrécissement de la surface de section pouvant être librement traversée par un flux, situé à l'aval d'un filtre à particules (6, 23).

4. Installation de nettoyage des gaz d'échappement selon l'une des revendications 1 à 3, **caractérisée en ce que** le tube de réaction (11, 27) présente une surface de section constante ou sensiblement constante pouvant être librement traversée par un flux.

5. Installation de nettoyage des gaz d'échappement selon l'une des revendications 1 à 4, **caractérisée en ce que** le tube de réaction présente des structures de parois internes qui guident le flux et/ou des éléments intégrés qui guident le flux.

6. Installation de nettoyage des gaz d'échappement selon l'une des revendications 1 à 5, **caractérisée en ce que** le groupe de nettoyage des gaz d'échappement intégré au circuit des gaz d'échappement (2) est un catalyseur RCS (4) et que l'alimentation de produit de réaction destinée à acheminer une solution aqueuse d'urée est raccordée à un récipient de stockage de solution d'urée.
